# EUROPEAN PATENT APPLICATION

(11) **EP 4 415 241 A1**
(43) Date of publication of application: **14.08.2024**
(21) Application number: 22891476.8
(22) Date of filing: 01.07.2022
(51) Int. Cl.: H02M 1/36, H02M 1/32

(54) **SOFT START CIRCUIT, CONTROL METHOD THEREFOR, AND POWER SUPPLY DEVICE**

(30) Priority: 10.11.2021 CN 202111328984
(71) Applicant: Huawei Technologies Co., Ltd., Shenzhen, Guangdong 518129 (CN)
(72) Inventor: WU, Yukun, Shenzhen, Guangdong 518129 (CN); HU, Peiqing, Shenzhen, Guangdong 518129 (CN); ZHANG, Shanchun, Shenzhen, Guangdong 518129 (CN)
(74) Representative: Maiwald GmbH
(86) International application number: PCT/CN2022/103453
(87) International publication number: WO 2023/082667

(57) **Abstract**

This application provides a soft-start circuit, a control method thereof, and a power supply device. The soft-start circuit includes a controller, a switch unit, a free-wheeling unit, an energy storage unit, and an energy release unit. The switch unit is coupled between a first end of a power module and the energy release unit. The energy release unit is coupled to a second end of the energy storage unit. A first end of the free-wheeling unit is coupled to a second end of the power module and a first end of the energy storage unit. A second end of the free-wheeling unit is coupled to a node between the switch unit and the energy release unit. In a first time period, the controller is configured to control the switch unit to be on, so that the power module charges the energy storage unit through the energy release unit. In a second time period, the controller is configured to control the switch unit to be off, so that the energy release unit discharges the energy storage unit through the free-wheeling unit. The first time period and the second time period are one operating cycle. According to embodiments of this application, a soft-start function can be implemented. In addition, a smaller size is occupied, and costs are reduced.

## Description

### CROSS-REFERENCE TO RELATED APPLICATIONS

This application claims priority to Chinese Patent Application No. 202111328984.2, filed with the China National Intellectual Property Administration on November 10, 2021 and entitled "SOFT-START CIRCUIT, CONTROL METHOD THEREOF, AND POWER SUPPLY DEVICE", which is incorporated herein by reference in its entirety.

### TECHNICAL FIELD

This application relates to the field of electronic technologies, and in particular, to a soft-start circuit, a control method thereof, and a power supply device.

### BACKGROUND

A soft-start circuit may be used in an input port that needs hot swapping or has a capacitive load. Because a capacitor is short-circuited at a moment of power-on, and a current of an input loop may increase to an infinite value instantly, an input device may be protected, a switch may spark, and even a component on the input loop may be damaged. Therefore, a soft-start circuit needs to be added to the input loop.

In an existing soft-start circuit, a capacitor is connected in parallel to a metal-oxide semiconductor (Metal-Oxide Semiconductor, MOS) transistor, and then soft-start may be implemented by using a miller platform of the MOS transistor, thereby achieving current-limiting soft-start effect. However, the MOS transistor operates in a linear area for a long time, in other words, a component with a large safe operating area (Safe Operating Area, SOA) needs to be selected. In addition, a package size of a MOS transistor with a large SOA is large. This undoubtedly increases a layout area and costs, and further affects a size occupied by the entire soft-start circuit.

### SUMMARY

In view of this, this application provides a soft-start circuit, a control method thereof, and a power supply device. A soft-start function can be implemented. In addition, a smaller size is occupied, thereby reducing costs.

According to a first aspect, an embodiment of this application provides a soft-start circuit. The soft-start circuit is configured for start control in a process in which a power module supplies power to a load device. The soft-start circuit includes a controller, a switch unit, a free-wheeling unit, an energy storage unit, an energy release unit, and the controller. The controller is coupled to the switch unit. The switch unit is coupled between a first end of the power module and the energy release unit. The energy release unit is coupled to a second end of the energy storage unit. A first end of the free-wheeling unit is coupled to a second end of the power module and a first end of the energy storage unit. A second end of the free-wheeling unit is coupled to a node between the switch unit and the energy release unit. In a first time period, the controller is configured to control the switch unit to be on, so that the power module charges the energy storage unit through the energy release unit. In a second time period, the controller is configured to control the switch unit to be off, so that the energy release unit discharges the energy storage unit through the free-wheeling unit. The first time period and the second time period are one operating cycle.

According to the soft-start circuit in this embodiment of this application, a requirement of the soft-start circuit on the switch unit is reduced. A component with a small SOA may be selected for the switch unit, and a package size of a switch with a large SOAis small, so that a size of a switch and a size of a circuit board are reduced. Therefore, a size of the entire soft-start circuit and a size of a power supply device are reduced.

In a possible design, the controller is coupled to the energy storage unit to detect a voltage of the energy storage unit. Based on such a design, the controller obtains a status of the energy storage unit in real time, and may control a status of the switch unit based on the status of the energy storage unit, thereby softly starting a power supply process of the power supply device for the load device. This improves safety of the power supply device.

In a possible design, when a difference between the voltage of the energy storage unit and an input voltage of the power module is less than a voltage threshold, the controller controls the switch unit to be on, to control the power module to supply power to the load device. Based on such a design, when the voltage of the energy storage unit is close to the input voltage of the power module, the controller may end soft-start of the power supply device, and control the switch unit to remain in an on state. In this way, the power module may supply power to the load device.

In a possible design, the switch unit is any one of a field-effect transistor, a transistor, a triode, and a relay.

In a possible design, the energy storage unit is a capacitor, and the energy release unit is an inductor.

In a possible design, the free-wheeling unit includes a diode. A cathode of the diode is coupled to the second end of the power module and the first end of the energy storage unit. An anode of the diode is coupled to the node between the switch unit and the energy release unit.

According to a second aspect, an embodiment of this application provides a soft-start circuit. The soft-start circuit is configured for start control in a process in which a power module supplies power to a load device. The soft-start circuit includes a controller, a switch unit, a free-wheeling unit, an energy storage unit, an energy release unit, and the controller. The controller is coupled to the switch unit. The switch unit is coupled between a first end of the power module and a first end of the energy storage unit. The first end of the energy release unit is coupled to a second end of the power module and a first end of the free-wheeling unit. The second end of the energy release unit is coupled to a second end of the energy storage unit. A second end of the free-wheeling unit is coupled to a node between the switch unit and the first end of the energy storage unit. In a first time period, the controller is configured to control the switch unit to be on, so that the power module charges the energy storage unit through the energy release unit. In a second time period, the controller is configured to control the switch unit to be off, so that the energy release unit discharges the energy storage unit through the free-wheeling unit. The first time period and the second time period are one operating cycle.

According to the soft-start circuit in this embodiment of this application, a requirement of the soft-start circuit on the switch unit is reduced. A component with a small SOA may be selected for the switch unit, and a package size of a switch with a large SOA is small, so that a size of a switch and a size of a circuit board are reduced. Therefore, a size of the entire soft-start circuit and a size of a power supply device are reduced.

According to a third aspect, an embodiment of this application further provides a control method for a soft-start circuit. The soft-start circuit includes a controller, a switch unit, a free-wheeling unit, an energy storage unit, and an energy release unit. The control method for the soft-start circuit includes: controlling the switch unit to be on in a first time period, to control a power module to charge the energy storage unit; and controlling the switch unit to be off in a second time period, to control the energy release unit to discharge the energy storage unit through the free-wheeling unit. The first time period and the second time period are one operating cycle.

According to the control method in this embodiment of this application, a power supply process of a power supply device for a load device can be softly started, thereby improving safety of the power supply device. In addition, the control method for the soft-start circuit in this embodiment of this application has advantages of simple logic control and low costs.

In a possible design, the control method for the soft-start circuit further includes: detecting a voltage of the energy storage unit; and if the voltage of the energy storage unit is equal to an input voltage of the power supply device, or a voltage difference between the voltage of the energy storage unit and an input voltage of the power supply device is less than a preset threshold, controlling the switch unit to remain operating in an on state.

Based on such a design, the controller may control the switch unit to remain operating in the on state, and then end soft-start of the power supply device by the soft-start circuit, that is, end a soft-start process.

According to a third aspect, an embodiment of this application further provides a power supply device. The power supply device includes a power module and the foregoing soft-start circuit.

According to the soft-start circuit, the control method thereof, and the power supply device provided in embodiments of this application, the power supply process of the power supply device for the load device can be softly started, thereby improving safety of the power supply device. According to embodiments of this application, a component with a small SOA may be selected for a switching transistor, and a package size of a MOS transistor with a large SOA is small, so that a size of the switching transistor and the size of the circuit board are reduced. Therefore, the size of the entire soft-start circuit is reduced, and the size of the power supply device may further be reduced.

### BRIEF DESCRIPTION OF DRAWINGS

FIG. 1 is a schematic diagram of a structure of a power supply device according to an embodiment of this application;
FIG. 2 is a circuit diagram of a soft-start circuit according to an embodiment of this application;
FIG. 3 is a diagram of a relationship between a voltage of an energy storage unit during charging and time according to an embodiment of this application;
FIG. 4 is a diagram of a relationship between a status of a switch unit and time according to an embodiment of this application;
FIG. 5 is another circuit diagram of a soft-start circuit according to an embodiment of this application;
FIG. 6 is another circuit diagram of a soft-start circuit according to an embodiment of this application;
FIG. 7 is another circuit diagram of a soft-start circuit according to an embodiment of this application;
FIG. 8 is a diagram of a relationship between a status of a switch unit and time according to an embodiment of this application; and
FIG. 9 is a flowchart of a control method for a soft-start circuit according to an embodiment of this application.

### Reference numerals:

| | |
|---|---|
| Power supply device | 100 |
| Load device | 200 |
| Soft-start circuit | 10 |
| Switch unit | 11 |
| Free-wheeling unit | 12 |
| Energy storage unit | 13 |
| Controller | 14 |
| Energy release unit | 15 |
| Current detection unit | 16 |
| Power module | 20 |
| Power conversion module | 30 |
| Switch | Q1 |
| Capacitor | C1 to C2 |
| Inductor | L1 |
| Diode | D1 |

In the following specific implementations, this application is further described with reference to the accompanying drawings.

### DESCRIPTION OF EMBODIMENTS

It should be noted that when an element is considered as "connected" to another element, the element may be directly connected to the another element, or there may be an element disposed between the two elements. When an element is considered to be "disposed" on another element, the element may be directly disposed on the another element, or there may be an element disposed between the two elements.

Unless otherwise defined, all technical and scientific terms used in this specification have same meanings as those usually understood by a person skilled in the art of this application. The terms used in the specification of this application are merely for the purpose of describing specific embodiments, and are not intended to limit this application. The term "and/or" used in this specification includes any and all combinations of one or more related listed items.

In a communication system, some load devices include capacitors, for example, a power supply, a router, and a switch. At a moment when the load device is powered on, the capacitor in the load device is prone to be short-circuited. Once the capacitor is short-circuited, a current in a power supply loop may form a peak value instantaneously. As a result, a preceding circuit may be overloaded and restarted, and a component on the power supply loop is damaged. Therefore, it is very important to add a soft-start circuit to the power supply loop.

In a scenario, in the soft-start circuit, a metal-oxide semiconductor (Metal-Oxide Semiconductor, MOS) transistor is connected in parallel to a capacitor, and soft-start is implemented by using a miller platform of the MOS transistor, thereby implementing current limiting and soft-start. However, in this manner, the MOS transistor operates in a linear area, and a requirement on the MOS is very high, that is, a component with a large safe operating area (Safe Operating Area, SOA) needs to be selected. In addition, a package size of a MOS transistor with a large SOA is large. This undoubtedly increases a layout area and costs, and further affects a size occupied by the entire soft-start circuit.

For the problem in the foregoing scenario, embodiments of this application provide a soft-start circuit and a power supply device. The soft-start circuit may be configured for start control in a process in which a power module supplies power to a load device, can implement a soft-start function, and occupies a smaller size, thereby reducing costs.

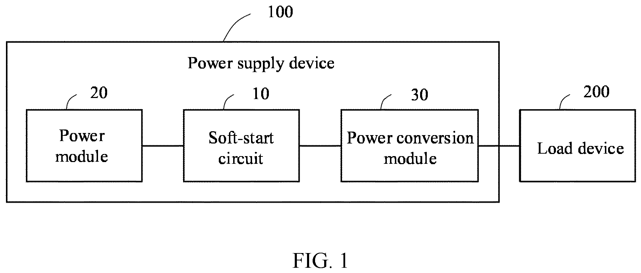

FIG. 1 is a schematic diagram of a structure of a power supply device 100 according to an embodiment of this application. The power supply device 100 in this embodiment may be coupled to a load device 200. In a possible scenario, the power supply device 100 may be configured to supply power to the load device 200.

Specifically, the power supply device 100 may include a soft-start circuit 10 and a power module 20. The soft-start circuit 10 may be coupled between the power module 20 and the load device 200. It may be understood that the soft-start circuit 10 may implement a soft-start function in a process that the power module 20 supplies power for the load device 200. In addition, the soft-start circuit 10 may occupy a smaller size, thereby reducing a size of a circuit board. In this way, a volume of the entire soft-start circuit is reduced, thereby reducing costs.

It may be understood that, in a possible implementation, the power supply device 100 may further include a power conversion module 30. The power conversion module 30 may be coupled between the soft-start circuit 10 and the load device 200. In an embodiment, the power conversion module 30 may be a voltage converter that converts an input voltage and effectively outputs a constant voltage. For example, the power conversion module 30 may be a DC-DC converter. For example, the power supply device 100 may convert input power (for example, -48 V) into required power by using the power conversion module 30, for example, 5 V, 3.3 V, or 2.5 V power. Therefore, the power obtained by the power conversion module 30 through conversion may be supplied to the load device 200. It may be understood that, to reduce current impact when the load device is plugged and powered on, in this embodiment of this application, the soft-start circuit 10 may be connected before the power conversion module 30.

It may be understood that, because a voltage difference between the input voltage and an output voltage of the power supply device 100 is large, and there is a large capacitor for filtering and preventing transient power failure in a circuit, which is charged and discharged, when the power module 20 is plugged for power-on, the -48 V power may be impacted, and a high transient current may cause a voltage drop of the -48 V power, which may affect normal operation of another component. In addition, due to the high transient current, obvious sparks occur on a plug connector when a board is plugged. As a result, electromagnetic interference occurs, and the plug connector is corroded. Therefore, to solve the foregoing technical problems, a power-on rate of the -48 V power needs to be controlled, in other words, the soft-start circuit 10 needs to be added. When hot swap occurs, the soft-start circuit 10 may implement slow power-on with the power, thereby reducing the current impact on the power conversion module 30.

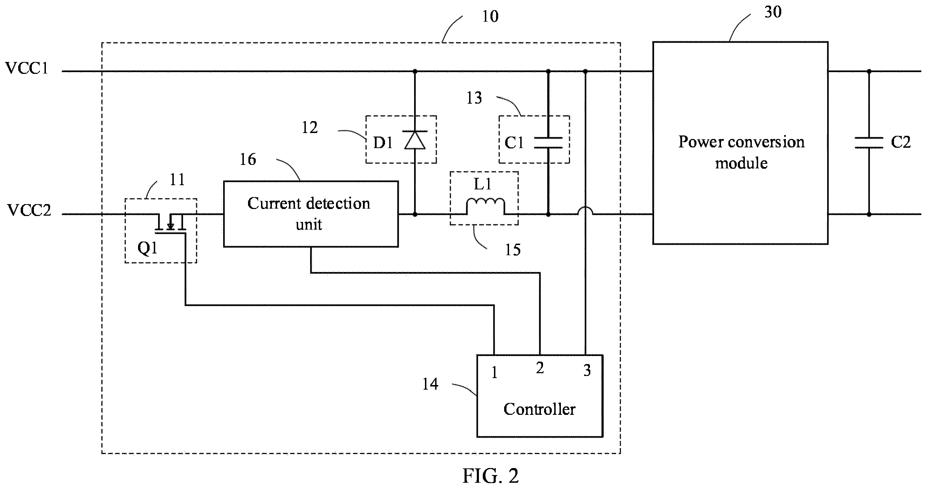

FIG. 2 is a schematic diagram of a circuit structure of the soft-start circuit 10 according to an embodiment of this application.

The soft-start circuit 10 in this embodiment may include a switch unit 11, a free-wheeling unit 12, an energy storage unit 13, a controller 14, an energy release unit 15, and a current detection unit 16.

It may be understood that the power module 20 in this embodiment may include an output end VCC1 and an output end VCC2. It may be understood that a voltage of the output end VCC1 may be higher than that of the output end VCC2. In this embodiment of this application, a voltage level of power is not specifically limited, and whether the voltage of the power is positive or negative is also not limited. For example, the voltage may be a positive voltage or a negative voltage. For example, in an implementation, when the power module 20 is a negative-voltage power supply, the output end VCC1 may be 0 V, and the output end VCC2 may be -48 V

The switch unit 11 may be coupled between the output end VCC2 and a first end of the energy release unit 15. A second end of the energy release unit 15 may be coupled to a second end of the energy storage unit 13 and the power conversion module 30. A first end of the free-wheeling unit 12 may be coupled to the output end VCC1 and a first end of the energy storage unit 13. A second end of the free-wheeling unit 12 may be coupled to a node between the switch unit 11 and the energy release unit 15.

The controller 14 may be coupled to the switch unit 11, to control turn-off and turn-on of the switch unit 11. For example, when the switch unit 11 is turned on, the power module 20 may charge the energy storage unit 13. When the switch unit 11 is turned off, the energy release unit 15 may discharge the energy storage unit 13 through the free-wheeling unit 12.

For example, in an embodiment, the switch unit 11 may include a switch Q1. The free-wheeling unit 12 may include a diode D1. The energy storage unit 13 may include a capacitor C1. The energy release unit 15 may include an inductor L1. It may be understood that, in a possible implementation, the switch Q1 may be a semiconductor power device. For example, the switch Q1 may be any one of a field-effect transistor, a transistor, and a triode. The field-effect transistor is a metal-oxide semiconductor field-effect transistor (Metal-Oxide Semiconductor Field-Effect Transistor, MOSFET), a MOS transistor for short. A type of the MOS transistor may include a PMOS and an NMOS.

A first end of the switch Q1 may be coupled to a first end of the inductor L1. A second end of the switch Q1 may be coupled to the output end VCC2 of the power module 20. A third end of the switch Q1 may be coupled to a first pin 1 of the controller 14. The third end of the switch Q1 may be a control end of the switch Q1. The first pin 1 of the controller 14 may output a signal to the switch Q1, to control a status of the switch Q1.

An anode of the diode D1 may be coupled to a node between the second end of the switch Q1 and a first end of the inductor L 1. A cathode of the diode D1 may be coupled to the output end VCC1 of the power module 20. A second end of the inductor L1 may be coupled to a first end of the capacitor C1 and the power conversion module 30. A second end of the capacitor C1 may be coupled to the output end VCC1 of the power module 20 and the power conversion module 30. In a possible implementation, a second pin 2 of the controller 14 may be coupled to the current detection unit 16. The current detection unit 16 may further be coupled between the second end of the switch Q1 and the anode of the diode D 1. A third pin 3 of the controller 14 may be coupled to a node between the first end of the capacitor C1 and the power conversion module 30. Based on such a design, the controller 14 may detect a voltage of the capacitor C1 in real time, and may control the status of the switch Q1 based on the voltage of the capacitor C 1. A first output end of the power conversion module 30 is coupled to the first end of the capacitor C2. A second output end of the power conversion module 30 is coupled to the second end of the capacitor C2.

In this embodiment of this application, the capacitor C1 may be configured to store energy. The switch Q1 may be configured to delay charging of the capacitor C1 to prevent the capacitor C1 from being charged with a high current, thereby implementing overcurrent protection.

The controller 14 may be configured to control the status of the switch Q1. For example, the controller 14 may control turn-on or turn-off of the switch Q1.

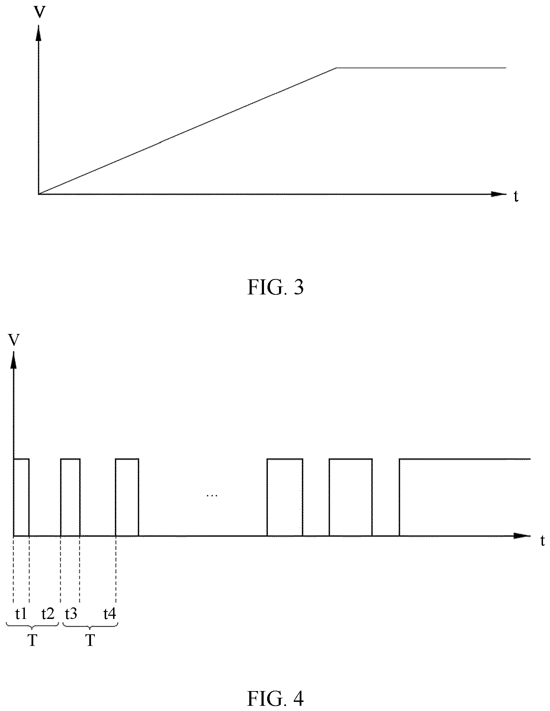

FIG. 3 is a schematic diagram of charging the capacitor C 1. It may be learned that when the power supply device 100 starts power-on, the soft-start circuit 10 may operate to periodically control the switch Q1 to be in an on or off state, to charge the capacitor C1, and the voltage of the capacitor C1 gradually increases. When the voltage of the capacitor C 1 is equal to the input voltage of the power supply device 100, or a voltage difference between the voltage of the capacitor C1 and the input voltage of the power supply device 100 is less than a voltage threshold, the controller 14 may control the switch Q1 to remain operating in an on state.

Further, the controller 14 may control, in a first time period, the switch Q1 to be in the on state. Then, the controller 14 further controls, in a second time period, the switch Q1 to be in the off state. It may be understood that the first time period and the second time period may be one operating cycle T. That is, the controller 14 may control, in a plurality of operating cycles T, the switch Q1 to operate in on and off modes.

An example in which one operating cycle T is 2s is used for description. As shown in FIG. 4, the switch for soft-start control may be turned on in the following process: In a time period t1 (for example, t1 may be a time period of 0.4s), the controller 14 may control the switch Q1 to be on, and in the time period t1, a current output by the power module 20 may flow through the capacitor C1, the inductor L1, and the switch Q1 through the output end VCC1. In this case, the current may charge the capacitor C1, and a current of the inductor L1 is also increasing, that is, the inductor L1 is storing energy.

In a time period t2 (for example, t2 may be a time period of 1.6s), the controller 14 may further control the switch Q1 to be off. In the time period t2, the power module 20 is electrically disconnected from the soft-start circuit 10, and energy stored in the inductor L1 may form a free-wheeling path through the diode D1 and charge the capacitor C1 at the same time.

Then, in a time period t3 (for example, t3 may be a time period of 1.5s), the controller 14 controls the switch Q1 to be on. In this case, a current output by the power module 20 may flow through the capacitor C1, the inductor L1, and the switch Q1 through the output end VCC1. The current may charge the capacitor C1.

In a time period t4 (for example, t4 may be a time period of 1.5s), the controller 14 may control the switch Q1 to be off. In this case, energy stored in the inductor L1 may form a free-wheeling path through the diode D1, to charge the capacitor C1.

The controller 14 may control turn-on or turn-off of the switch Q1 in the plurality of operating cycles T. The power module 20 may charge the capacitor C1 when the switch Q1 is on and off. When the voltage of the capacitor C1 is equal to the input voltage of the power supply device 100, or the voltage difference between the voltage of the capacitor C1 and the input voltage of the power supply device 100 is less than the threshold, the controller 14 may control the switch Q1 to remain operating in the on state.

In a possible implementation, the controller 14 may set soft-start time of the soft-start circuit 10 based on a capacity of the capacitor C1. For example, the controller 14 may control a quantity of times that the switch Q1 is turned on and off, and on-time and off-time in each operating cycle T. For example, the controller 14 may perform the following control on the switch Q1: the switch Q1 operates in four operating cycles T, and time of each operating cycle is 3s. In a first operating cycle T1, the switch Q1 may be in the on state within 0.5s and in an off state within 2.5s. In a second operating cycle T2, the switch Q1 may be in the on state within 0.6s and in the off state within 2.4s. In a third operating cycle T3, the switch Q1 may be in the on state within 0.7s and in the off state within 2.3s. In a fourth operating cycle T4, the switch Q1 may be in the on state within 0.8s and in the off state within 2.2s. Then, after the fourth operating cycles T4, if the voltage of the capacitor C1 is equal to an input voltage of the power module 20, soft-start of the power supply device by the soft-start circuit 10 may be ended, and the controller 14 controls the switch Q1 to remain in the on state, that is, a soft-start process ends. Based on such a design, in this embodiment of this application, the power supply process of the power supply device for the load device may be softly started, thereby improving safety of the power supply device. In addition, the soft-start time may be set for the soft-start circuit in this embodiment of this application, and the soft-start circuit has advantages of simple logic control, a simple circuit structure, and low costs.

Compared with the conventional technology in which a MOS transistor operates in a linear area for a long time, in this embodiment of this application, the switch Q1 may operate in a pulse width modulation (Pulse width modulation, PWM) mode, that is, a requirement of the soft-start circuit on the MOS transistor is reduced. To be specific, in this embodiment of this application, a component with a small SOA may be selected for the MOS transistor, and a package size of a MOS transistor with a large SOA is small, so that a size of the MOS transistor and the size of the circuit board are reduced. Therefore, the size of the entire soft-start circuit and a size of the power supply device are reduced.

Based on the design in this embodiment of this application, the soft-start circuit 10 may not only implement a soft-start function, but also occupy a smaller size, thereby reducing costs.

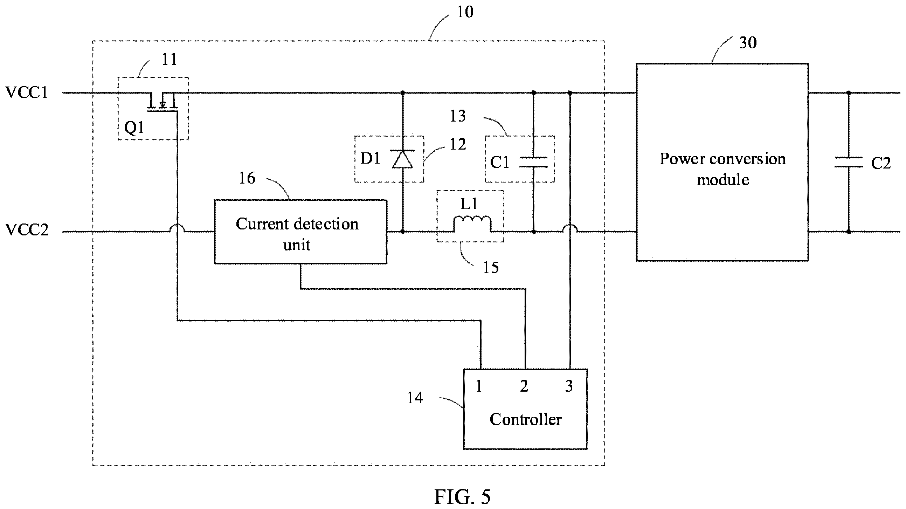

FIG. 5 is a schematic diagram of a circuit structure of the soft-start circuit 10 according to another embodiment of this application.

A difference from the embodiment shown in FIG. 2 lies in that, in this embodiment, as shown in FIG. 5, the first end of the switch Q1 may be coupled to the first end of the power module 20. The second end of the switch Q1 may be coupled to the first end of the capacitor C1 and the power conversion module 30. The third end of the switch Q1 may be coupled to the first pin 1 of the controller 14. The third end of the switch Q1 is the control end of the switch Q1. The cathode of the diode D1 may be coupled to the second end of the switch Q1. The anode of the diode D1 may be coupled to the first end of the inductor L1. The second end of the inductor L1 may be coupled to the second end of the capacitor C1 and the power conversion module 30. The second pin 2 of the controller 14 may be coupled to the current detection unit 16. The current detection unit 16 may be coupled between the anode of the diode D1 and the output end VCC2. The third pin 3 of the controller 14 may be coupled to the first end of the capacitor C1, to detect a voltage of the capacitor C1.

It may be understood that the switch Q1 in the embodiment shown in FIG. 5 may also operate in a pulse width modulation (Pulse width modulation, PWM) mode, so that a requirement of the soft-start circuit on the MOS transistor is reduced, and the size of the MOS transistor and the size of the circuit board may be reduced. Therefore, the size of the entire soft-start circuit and the size of the power supply device are reduced.

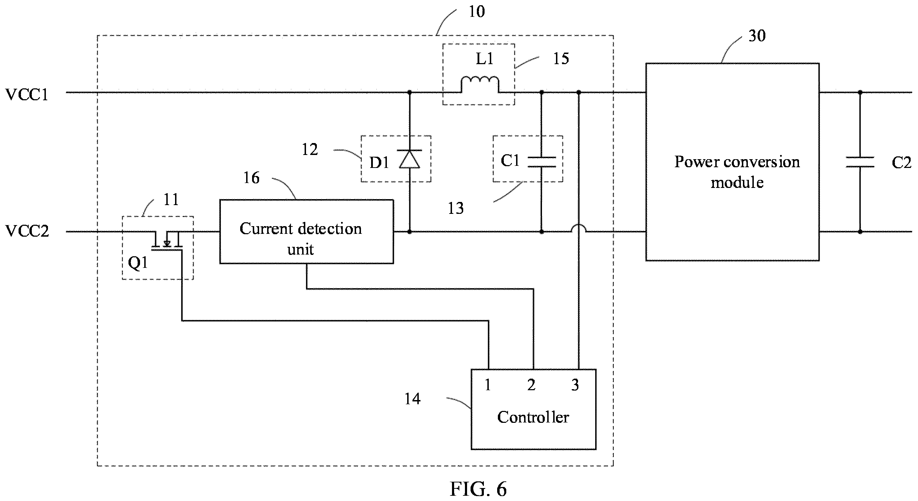

FIG. 6 is a schematic diagram of a circuit structure of the soft-start circuit 10 according to another embodiment of this application.

A difference from the embodiment shown in FIG. 2 lies in that, in this embodiment, as shown in FIG. 6, the first end of the inductor L1 may be coupled to the output end VCC1 of the power module 20. The second end of the inductor L1 may be coupled to the first end of the capacitor C1 and the power conversion module 30. The cathode of the diode D1 may be coupled to the first end of the inductor L1. The anode of the diode D1 may be coupled to the second end of the switch Q1. The first end of the switch Q1 may be coupled to the output end VCC2 of the power module 20. The third end of the switch Q1 may be coupled to the first pin 1 of the controller 14. The third end of the switch Q1 may be the control end of the switch Q1. The second end of the capacitor C1 may be coupled to the power conversion module 30. The second pin 2 of the controller 14 may be coupled to the current detection unit 16. The current detection unit 16 may further be coupled between the anode of the diode D1 and the second end of the switch Q1. The third pin 3 of the controller 14 may be coupled to the first end of the capacitor C 1.

It may be understood that the switch Q1 in the embodiment shown in FIG. 6 may also operate in a pulse width modulation (Pulse width modulation, PWM) mode, so that a requirement of the soft-start circuit on the MOS transistor is reduced, and the size of the MOS transistor and the size of the circuit board may be reduced. Therefore, the size of the entire soft-start circuit and the size of the power supply device are reduced.

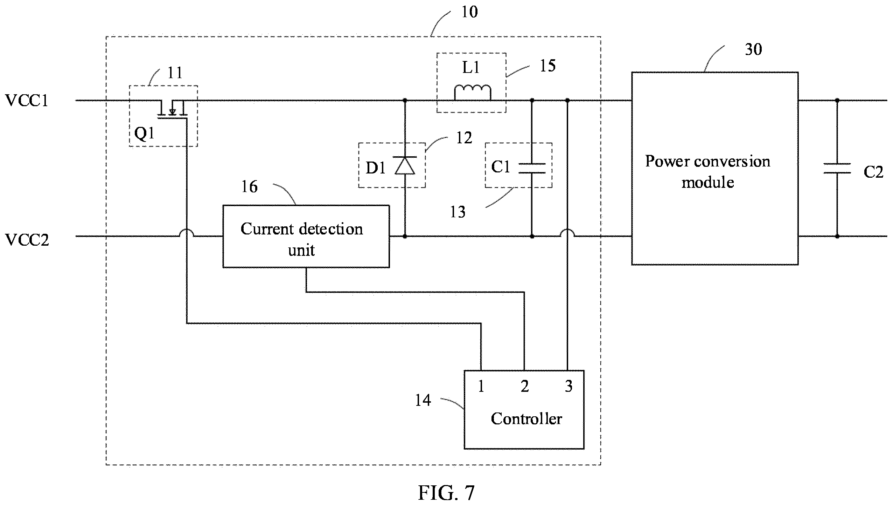

FIG. 7 is a schematic diagram of a circuit structure of the soft-start circuit 10 according to another embodiment of this application.

A difference from the embodiment shown in FIG. 2 lies in that, in this embodiment, as shown in FIG. 7, the first end of the switch Q1 may be coupled to the output end VCC1 of the power module 20. The second end of the switch Q1 may be coupled to the first end of the inductor L1. The third end of the switch Q1 may be coupled to the first pin 1 of the controller 14. The second end of the inductor L1 may be coupled to the power conversion module 30. The first end of the inductor L1 may be further coupled to the first end of the capacitor C 1. The cathode of the diode D1 may be coupled to the node between the second end of the switch Q1 and the first end of the inductor L1. The anode of the diode D1 may be coupled to the output end VCC2 of the power module 20 and the second end of the capacitor C1. The second pin 2 of the controller 14 may be coupled to the current detection unit 16. The current detection unit 16 may be coupled between the anode of the diode D1 and the output end VCC2. The third pin 3 of the controller 14 may be coupled to the first end of the capacitor C1, to detect a voltage of the capacitor C 1.

In a possible implementation, the controller 14 may control a status of the switch Q1 based on the detected voltage of the capacitor C1. When a voltage difference between an input voltage of the power module 20 and the voltage of the capacitor C1 is less than a voltage threshold, soft-start of the power supply device may be ended. For example, an example in which the voltage threshold is 1 V is used for description. If the input voltage of the power module 20 is 48 V, and the voltage of the capacitor C1 is 46 V, the voltage difference between the input voltage and the voltage of the capacitor C1 is 2 V, that is, the voltage difference between the input voltage and the voltage of the capacitor C1 is greater than the voltage threshold. In this case, the power supply device 100 has not completed soft-start of the circuit, and the controller 14 controls the switch Q1 to be in a PWM control mode. If the input voltage of the power module 20 is 48 V, and the voltage of the capacitor C1 is 47.5 V, the voltage difference between the input voltage and the voltage of the capacitor C1 is 0.5 V, that is, the voltage difference between the input voltage and the voltage of the capacitor C1 is less than the voltage threshold. In this case, the power supply device 100 may complete soft-start of the circuit, and the controller 14 controls the switch Q1 to remain in an on state. Based on such a design, the soft-start circuit in this embodiment of this application may end soft-start when detecting that the voltage difference between the input voltage and the voltage of the capacitor C1 reaches the voltage threshold, and has strong adaptability.

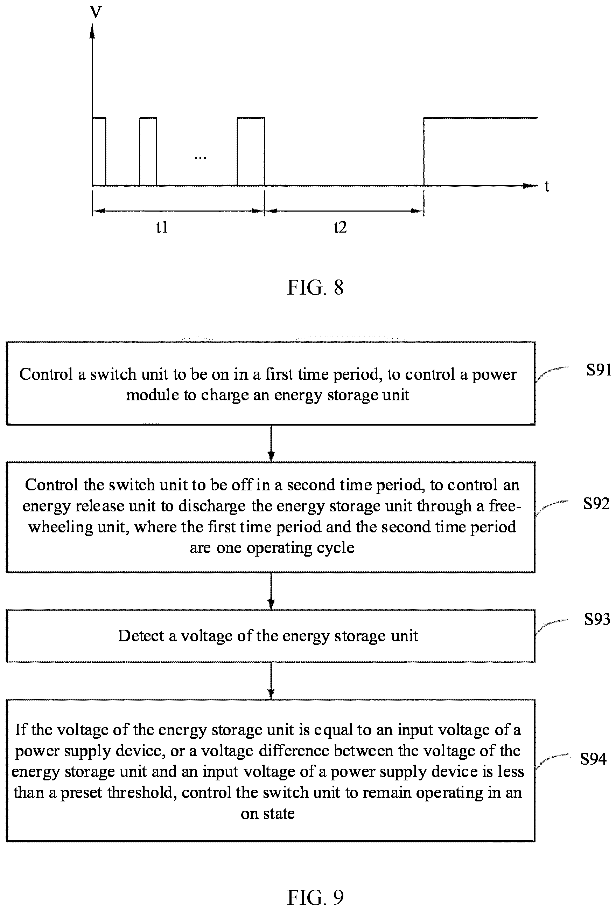

In another possible implementation, the controller 14 may control the switch Q1 in different time periods. For example, as shown in FIG. 8, in a time period t1, the controller 14 controls the switch Q1 to operate in a PWM mode, so that the capacitor C1 may be charged, and the voltage of the capacitor C1 reaches a voltage value. In a time period t2, the controller 14 may detect a current of the power supply device by using the current detection unit 16, and may control a status of the switch Q1 based on the detected current. For example, if the detected current reaches 1 A, the switch Q1 is controlled to be turned off. In this case, the capacitor C1 is still in a charging state. When a voltage difference between an input voltage and the voltage of the capacitor C1 is less than a voltage threshold, soft-start is ended, and the switch Q1 is controlled to remain in an on state.

Based on the foregoing embodiments, in this embodiment of this application, a power supply process of the power supply device for the load device can be softly started, thereby improving safety of the power supply device. According to this embodiment of this application, a component with a small SOA may be selected for the MOS transistor, and a package size of a MOS transistor with a large SOA is small, so that the size of the MOS transistor and the size of the circuit board are reduced. Therefore, the size of the entire soft-start circuit is reduced, and the size of the power supply device may further be reduced.

FIG. 9 is a flowchart of a control method for a soft-start circuit according to an embodiment of this application. The control method for a soft-start circuit may include the following steps.

Step S91: Control a switch unit to be on in a first time period, to control a power module to charge an energy storage unit.

The soft-start circuit 10 shown in FIG. 2 is used as an example for description. The controller 14 may control, in the first time period, the switch unit 11 to be in an on state. For example, in a time period t1 (for example, t1 may be a time period of 0.4s), the controller 14 may control the switch Q1 to be on. In a time period t1, a current output by the power module 20 may pass through the energy storage unit 13, the energy release unit 15, and the switch unit 11 through the output end VCC1. In this case, the current may charge the energy storage unit 13, and a current of the energy release unit 15 is also increasing, that is, the inductor L1 is storing energy.

Step S92: Control the switch unit to be off in a second time period, to control an energy release unit to discharge the energy storage unit through a free-wheeling unit, where the first time period and the second time period are one operating cycle.

The controller 14 may control, in the second time period, the switch unit 11 to be in an off state. For example, in a time period t2 (for example, t2 may be a time period of 1.6s), the controller 14 may further control the switch unit 11 to be off. In the time period t2, the power module 20 is electrically disconnected from the soft-start circuit 10, and energy stored in the energy release unit 15 may form a free-wheeling path through the free-wheeling unit 12 and charge the energy storage unit 13 at the same time.

It may be understood that the first time period and the second time period may be one operating cycle T. That is, the controller 14 may control, in a plurality of operating cycles T, the switch unit to operate in on and off modes. An example in which one operating cycle T is 2s is used for description. The first time period may be a time period of 0.4s, and the second time period may be a time period of 1.6s. Alternatively, the first time period may be a time period of 0.3s, and the second time period may be a time period of 1.7s.

Step S93: Detect a voltage of the energy storage unit.

The soft-start circuit 10 shown in FIG. 2 is used as an example for description. The third pin 3 of the controller 14 may be coupled to a node between the first end of the energy storage unit 13 and the power conversion module 30. In this way, the controller 14 may detect a voltage of the energy storage unit 13 in real time, and control a status of the switch unit 11 based on the voltage of the energy storage unit 13.

Step S94: If the voltage of the energy storage unit is equal to an input voltage of a power supply device, or a voltage difference between the voltage of the energy storage unit and an input voltage of a power supply device is less than a preset threshold, control the switch unit to remain operating in an on state.

It may be understood that, in this embodiment, the controller 14 may control turn-on or turn-off of the switch unit 11 in the plurality of operating cycles T. The power module 20 may charge the energy storage unit 13 when the switch unit 11 is on and off. When the voltage of the energy storage unit 13 is equal to an input voltage of the power supply device 100, or a voltage difference between the voltage of the energy storage unit 13 and an input voltage of the power supply device 100 is less than a threshold, the controller 14 may control the switch unit 11 to remain operating in the on state, and end soft-start of the power supply device by the soft-start circuit 10. The controller 14 controls the switch Q1 to remain in the on state, that is, a soft-start process ends. Based on such a design, in this embodiment of this application, a power supply process of the power supply device for a load device may be softly started, thereby improving safety of the power supply device. In addition, the control method for a soft-start circuit in this embodiment of this application has advantages of simple logic control and low costs.

Compared with the conventional technology in which a MOS transistor operates in a linear area for a long time, in this embodiment of this application, the switch unit may operate in a pulse width modulation mode, that is, a requirement of the soft-start circuit on a MOS transistor is reduced. To be specific, in this embodiment of this application, a component with a small SOA may be selected for the MOS transistor, and a package size of a MOS transistor with a large SOA is small, so that a size of the MOS transistor and a size of a circuit board are reduced. Therefore, a size of the entire soft-start circuit and a size of the power supply device are reduced.

Based on the design in this embodiment of this application, the soft-start circuit 10 may not only implement a soft-start function, but also occupy a smaller size, thereby reducing costs.

The above descriptions are merely preferred implementations of this application, and do not limit this application in any form. Although this application is disclosed as above with preferred implementations, the implementations are not intended to limit this application. Variations or modifications made by a person skilled in the art using the technical content disclosed above without departing from the scope of the technical solutions of this application are considered as equivalent implementations. However, any simple modifications, equivalent variations, and modifications made to the above implementations based on the technical essence of this application without departing from the content of the technical solutions of this application shall fall within the scope of the technical solutions of this application.

## Claims

1. A soft-start circuit, wherein the soft-start circuit is configured for start control in a process in which a power module supplies power to a load device, and the soft-start circuit comprises a controller, a switch unit, a free-wheeling unit, an energy storage unit, and an energy release unit;
the controller is coupled to the switch unit, the switch unit is coupled between a first end of the power module and the energy release unit, the energy release unit is coupled to a second end of the energy storage unit, a first end of the free-wheeling unit is coupled to a second end of the power module and a first end of the energy storage unit, and a second end of the free-wheeling unit is coupled to a node between the switch unit and the energy release unit;
in a first time period, the controller is configured to control the switch unit to be on, so that the power module charges the energy storage unit through the energy release unit;
in a second time period, the controller is configured to control the switch unit to be off, so that the energy release unit discharges the energy storage unit through the free-wheeling unit; and
the first time period and the second time period are one operating cycle.

2. The soft-start circuit according to claim 1, wherein
the controller is coupled to the energy storage unit to detect a voltage of the energy storage unit.

3. The soft-start circuit according to claim 1 or 2, wherein
when a difference between the voltage of the energy storage unit and an input voltage of the power module is less than a voltage threshold, the controller controls the switch unit to be on, to control the power module to supply power to the load device.

4. The soft-start circuit according to any one of claims 1 to 3, wherein
the switch unit is any one of a field-effect transistor, a transistor, a triode, and a relay.

5. The soft-start circuit according to any one of claims 1 to 4, wherein
the energy storage unit is a capacitor, and the energy release unit is an inductor.

6. The soft-start circuit according to any one of claims 1 to 5, wherein
the free-wheeling unit comprises a diode, a cathode of the diode is coupled to the second end of the power module and the first end of the energy storage unit, and an anode of the diode is coupled to the node between the switch unit and the energy release unit.

7. A soft-start circuit, wherein the soft-start circuit is configured for start control in a process in which a power module supplies power to a load device, and the soft-start circuit comprises a controller, a switch unit, a free-wheeling unit, an energy storage unit, an energy release unit, and the controller;
the controller is coupled to the switch unit, the switch unit is coupled between a first end of the power module and a first end of the energy storage unit, a first end of the energy release unit is coupled to a second end of the power module and a first end of the free-wheeling unit, a second end of the energy release unit is coupled to a second end of the energy storage unit, and a second end of the free-wheeling unit is coupled to a node between the switch unit and the first end of the energy storage unit;
in a first time period, the controller is configured to control the switch unit to be on, so that the power module charges the energy storage unit through the energy release unit;
in a second time period, the controller is configured to control the switch unit to be off, so that the energy release unit discharges the energy storage unit through the free-wheeling unit; and
the first time period and the second time period are one operating cycle.

8. A control method for a soft-start circuit, wherein the soft-start circuit comprises a controller, a switch unit, a free-wheeling unit, an energy storage unit, and an energy release unit; and the control method for a soft-start circuit comprises:
controlling the switch unit to be on in a first time period, to control a power module to charge the energy storage unit; and
controlling the switch unit to be off in a second time period, to control the energy release unit to discharge the energy storage unit through the free-wheeling unit, wherein
the first time period and the second time period are one operating cycle.

9. The control method for a soft-start circuit according to claim 8, further comprising:
detecting a voltage of the energy storage unit; and
if the voltage of the energy storage unit is equal to an input voltage of a power supply device, or a voltage difference between the voltage of the energy storage unit and an input voltage of a power supply device is less than a preset threshold, controlling the switch unit to remain operating in an on state.

10. A power supply device, wherein the power supply device comprises a power module and the soft-start circuit according to any one of claims 1 to 7.
